# EUROPEAN PATENT APPLICATION

(11) **EP 1 553 721 A1**
(43) Date of publication of application: **13.07.2005**
(21) Application number: 05000286.4
(22) Date of filing: 07.01.2005
(51) Int. Cl.: H04L 12/18, H04Q 7/22

(54) **Method and apparatus for converging broadcast service and multicast service in a mobile communication system**

(30) Priority: 08.01.2004 KR 2004001304
(71) Applicant: Samsung Electronics Co., Ltd., Suwon-si, Gyeonggi-do 442-742 (KR)
(72) Inventor: Lim, Han-Na, Samsung Electronics Co., Ltd., Suwon-si Gyeonggi-do (KR); Park, Jae-Woon, Samsung Electronics Co., Ltd., Suwon-si Gyeonggi-do (KR); Choi, Sung-Ho, Samsung Electronics Co., Ltd., Suwon-si Gyeonggi-do (KR); Jung, Ki-Ho, Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

A method and apparatus for simultaneously providing a multicast service and a broadcast service to a user to support MBMS in a CDMA mobile communication system are provided. A data generator, which can be in a BM-SC or an RNC, separately generates broadcast data and multicast data for a converged user service and simultaneously transmits the broadcast data and multicast data to users that have joined a broadcast session and a multicast session. When the multicast service is requested during receiving the broadcast service, a user terminal establishes a dedicated channel for receiving the multicast service, while maintaining a common channel for receiving the broadcast service, and then simultaneously receives the broadcast data and the multicast data on the common channel and the dedicated channel.

## Description

### BACKGROUND OF THE INVENTION

### 1. Field of the Invention

The present invention relates to a method and apparatus for providing a new type of MBMS (Multimedia Broadcast/Multicast Service) to users in a mobile communication system supporting the MBMS.

### 2. Description of the Related Art

The rapid development of communication technology is a driving force behind the development of the CDMA (Code Division Multiple Access) mobile communication systems of the provides a packet service communication for transmitting a large volume of data such as packet data and circuit data as well as conventional voice service, and provides a multimedia broadcast/telecommunication for transmitting multimedia data. To support the multimedia broadcast/telecommunication, which one or more multimedia data sources are to be used to provide services to a plurality of UEs (User Equipments) in the MBMS.

The MBMS enables the multimedia transmission including real-time video and audio data, still images, and text. It can simultaneously provide audio data and video data in multimedia transmission, but using a large amount of transmission resources. Since a plurality of UE may request the same service, an MBMS can be provided on a broadcast channel.

The MBMS is a point-to-multipoint one-way service from a single source to a user group including a plurality of users in a particular area. It works in a multicast mode supporting a multicast service or in a broadcast mode supporting a broadcast service.

A multicast service is a point-to-multipoint one-way service for effective transmission of MBMS data in a multicast service area from a single source to a multicast group. The multicast service is provided to users on a dedicated channel if they subscribe to the multicast service and join a multicast group activated to receive the multicast service. The multicast service area refers to an area in which the multicast service is available. It is defined on a multicast service basis. A multicast session is a continuous and time-bounded reception of a multicast service by a UE. A single multicast service can only have one multicast session at any time. A multicast service may consist of multiple successive multicast sessions, for example, text session and video sessions.

A broadcast service is a point-to-multipoint one-way service for effective transmission of MBMS data (hereinafter referred to as broadcast data) in a broadcast service area from a single source to a plurality of UEs. A broadcast service is provided on a common channel to UEs that activate the broadcast service. The broadcast service area refers to an area in which the broadcast service is available. It is defined on a broadcast service basis. A broadcast session is a continuous and time-bounded reception of a broadcast service by a UE.

An MBMS transport service is a higher-layer concept referring to a broadcast service or a multicast service. An MBMS user service can make use of parallel MBMS transport services.

An MBMS user service is defined as an MBMS service to be simultaneously delivered to multiple users through their UEs. The MBMS user service can be composed of multiple successive MBMS transport services. In a conventional MBMS system, a single MBMS user service is composed of multiple MBMS transport services all of which are multicast services or broadcast services.

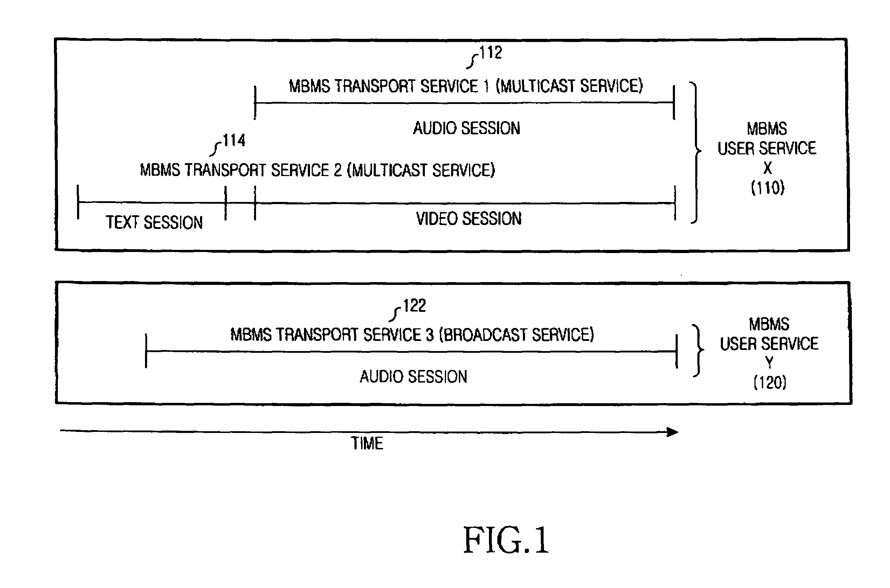

FIG 1 illustrates an example of MBMS service provisioning in the conventional MBMS system.

Referring to FIG. 1, an MBMS user service 114 (MBMS user service X) is composed of two MBMS transport services 112 and 114 (MBMS transport service 1 and MBMS transport service 2), both of which are multicast services. MBMS transport service 1 has an audio session (multicast session) and MBMS transport service 2 has a text session (multicast session) and a video session (multicast session). Another MBMS user service 120 (MBMS user service Y) is composed of an MBMS transport service 122 (MBMS transport service 3) being a broadcast service. MBMS transport service 3 has an audio session (broadcast session).

Since an MBMS transport service is a multicast service or a broadcast service, it is referred specifically to as a multicast service or a broadcast service. MBMS user service X uses the two multicast services 112 and 114, while MBMS user service Y uses the single broadcast service 122.

Between the two MBMS user services illustrated in FIG 1, for example, MBMS user service X can be an enhanced service from MBMS user service Y. Compared to MBMS user service Y including only audio data, MBMS user service X may include both audio and video data. The term "video data" refers to the data of pure moving pictures. In this case, it is inefficient to provide a large volume of video data by a broadcast service. Thus, MBMS user service X uses two separate multicast services for the audio and video data because the conventional MBMS system configures an MBMS user service with multicast or broadcast services only.

### SUMMARY OF THE INVENTION

The simultaneous provisioning of the two transport services with the same contents amounts to the redundant transmission of the same MBMS data. Moreover, a Node B uses both a dedicated channel for the multicast service and a common channel for the broadcast service to provide the same MBMS data, thereby resulting in unnecessary consumption of wired/wireless resources.

The conventional MBMS service cannot be composed of a multicast service and a broadcast service. The resulting redundant transmission of the same MBMS data to UEs causes consumption of system resources.

It is therefore an object of the present invention is to substantially solve at least the above problems and/or disadvantages and to provide at least the advantages below. Accordingly, an object of the present invention is to provide a method and apparatus for providing converged broadcast and multicast services to users in a mobile communication system supporting MBMS user services.

Another object of the present invention is to provide a method and apparatus for receiving an MBMS user service composed of broadcast and multicast services in a UE.

The above objects are achieved by providing a method and apparatus for simultaneously providing a multicast service and a broadcast service to a user to support MBMS in a CDMA mobile communication system.

According to one aspect of the present invention, in a method of providing a multicast service and a broadcast service to a user in a mobile communication system, broadcast data and multicast data for a converged user service are generated separately, and simultaneously transmitted to users that have joined a broadcast session and a multicast session.

According to another aspect of the present invention, in a method of receiving a multicast service and a broadcast service from a mobile communication system, a user terminal receives broadcast data related to the broadcast service. If the user terminal requests a converged user service including the broadcast service and the multicast service during reception of the broadcast service, the user terminal additionally receives the multicast data related to the multicast service, while continuously receiving the broadcast data. Then, the user terminal processes the broadcast data and the multicast data in convergence.

According to a further aspect of the present invention, in a system for providing a multicast service and a broadcast service to a user, a user data generator separately generates broadcast data and multicast data for a converged user service including a broadcast service and a multicast service. A base station receives the broadcast data and the multicast data from the user data generator and transmits the broadcast data on a common channel and the multicast data on a dedicated channel. A user terminal establishes a broadcast session and a multicast session with the user data generator through the base station, simultaneously receives the broadcast data on the common channel and the multicast data on the dedicated channel, and processes the broadcast data and the multicast data in convergence.

### BRIEF DESCRIPTION OF THE DRAWINGS

The above and other objects, features and advantages of the present invention will become more apparent from the following detailed description when taken in conjunction with the accompanying drawings in which:
FIG 1 illustrates an example of MBMS service provisioning in a conventional MBMS system;
FIG. 2 is a block diagram illustrating a WCDMA (Wideband Code Division Multiple Access) mobile communication system for providing MBMS services;
FIG 3 is a flowchart illustrating an operation for receiving a multicast service at a UE in an MBMS system;
FIG 4 is a flowchart illustrating an operation for receiving a broadcast service at the UE in the MBMS system;
FIG. 5 illustrates an example of MBMS user service according to a preferred embodiment of the present invention;
FIG 6 illustrates an MBMS user service procedure over time according to a preferred embodiment of the present invention;
FIG. 7 is a flowchart illustrating an operation for receiving an MBMS user service at a UE according to a preferred embodiment of the present invention;
FIG. 8 is a block diagram illustrating the configuration of a mobile communication system for transmitting MBMS data according to a preferred embodiment of the present invention;
FIG. 9 illustrates the structure of MBMS data generated by an MBMS data generator illustrated in FIG. 8; and
FIG. 10 is a block diagram of the UE for receiving an MBMS user service according to the preferred embodiment of the present invention.

### DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

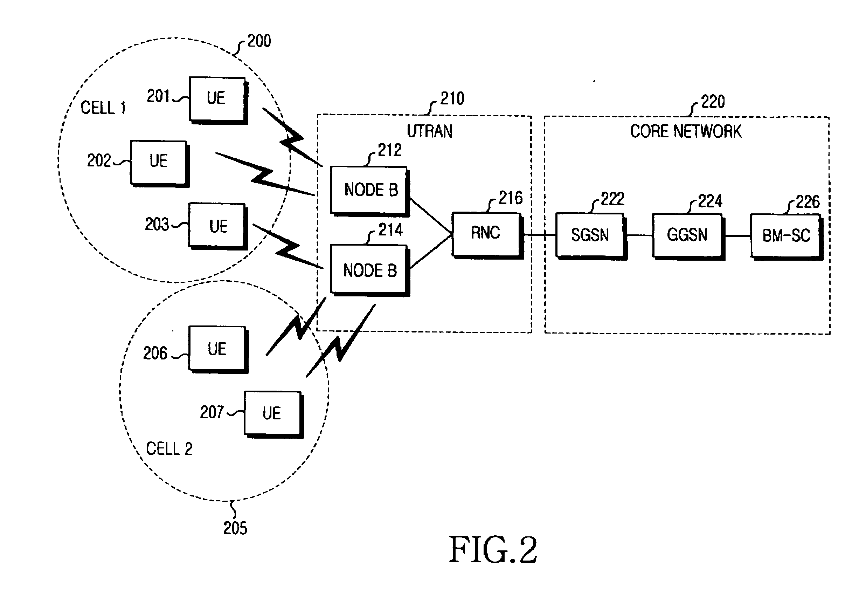

FIG. 2 is a block diagram illustrating the configuration of a WCDMA mobile communication system for providing MBMS services. The illustrated system is an application of the MBMS to a UMTS system (Universal Mobile Telecommunication Service) system based on the 3^{rd} generation asynchronous mobile communication standards of 3GPP (3^{rd} Generation Project Partnership).

Referring to FIG. 2, UEs 201, 202, 203, 206 and 207 are terminals capable of receiving MBMS services. Cells 200 and 205 (cell 1 and cell 2) are areas from which MBMS data is transmitted to the UEs 201, 202, 203, 206 and 207. A UTRAN (UMTS Terrestrial Radio Access Network) 210 includes Node Bs 212 and 214 and an RNC (Radio Network Controller) 216, for transmitting the MBMS data to the UEs 201, 202, 203, 206 and 207.

At least one RNC 216, the plurality of Node Bs 212 and 214, and the plurality of cells 200 and 205 exist under the UTRAN 210. The RNC 216 selectively transmits MBMS data to cells and controls radio channels established for MBMS services. Each RNC 216 controls its underlying Node Bs 212 and 214 and each Node B controls its underlying cells. The RNC 216 allocates or manages radio resources for the Node Bs 212 and 214, which actually provide the radio resources. The radio resources are configured on a cell basis and thus the radio resources provided by the Node Bs 212 and 214 are those of their underlying cells. The UEs 201, 202, 203, 206 and 207 establish radio channels by radio resources received from the cells that they belong to and communicate via the radio channels.

A CN (Core Network) 220 is comprised of at least one SGSN (Serving GPRS Supporting Node) 222, at least one GGSN (Gateway GPRS Supporting Node) 224, and a BM-SC (Broadcast Multicast-Service Center) 226. The SGSN 222 controls the MBMS of each subscriber. Its major functions include the management of service billing data for every subscriber and selective transmission of MBMS data to RNCs. The GGSN 224 serves as an entry point when MBMS data is composed of IP (Internet Protocol) multimedia traffic.

The BM-SC 226 is a source of MBMS data. It is an entity responsible for managing almost all of the MBMS-related services. The BM-SC 226 performs the scheduling of data for each MBMS service and manages the user billing information for use in the authentication and verification procedures performed by the content providers. The MBMS data is delivered from the MB-SC 226 to the UEs 201, 202, 203, 206 and 207 within the cells 200 and 205 through the GGSN 224, the SGSN 222, the RNC 216, and the Node Bs 212 and 214.

While not shown in FIG 2, a plurality of SGSNs may be involved in providing an MBMS and a plurality of RNCs exist under each SGSN. The SGSN selectively delivers data to the RNCs and each RNC selectively delivers the data to the cells. For the selective MBMS data transmission, the SGSN and the RNC store a list of RNCs and a list of cells to deliver the MBMS data streams to.

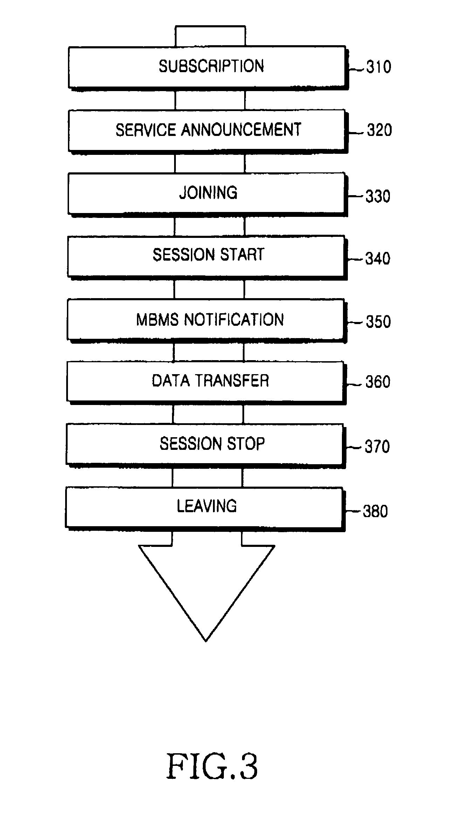

FIG. 3 is a flowchart illustrating an operation for receiving a multicast service at a UE in an MBMS system.

Referring to FIG 3, subscription 310 takes place between the UE and a service provider in regards to the multicast service. Service announcement 320 refers to notifying the UE that it can receive an MBMS user service in a predetermined area. The UE joins a multicast group in a joining step 330. The UE is now capable of receiving the multicast service.

The BM-SC notifies the UE that it is ready to send the MBMS data related to the multicast service (multicast data) in a session start step 340 and the UE is notified that it will receive the multicast data in an MBMS notification step 350. In step 360, the multicast data is delivered to the UE. In the data transfer step 360, the UE receives the MBMS user service by the multicast service on a dedicated channel.

If there is no more multicast data, the session is stopped in step 370 and the UE leaves the multicast group in step 380. The subscription 310, joining 330, and leaving 380 are performed on a UE basis and the other steps 320, 340 to 370 are performed on a multicast service basis. The subscription 310, joining 330, leaving 380, service announcement 320, and MBMS notification 350 may occur in parallel to other steps.

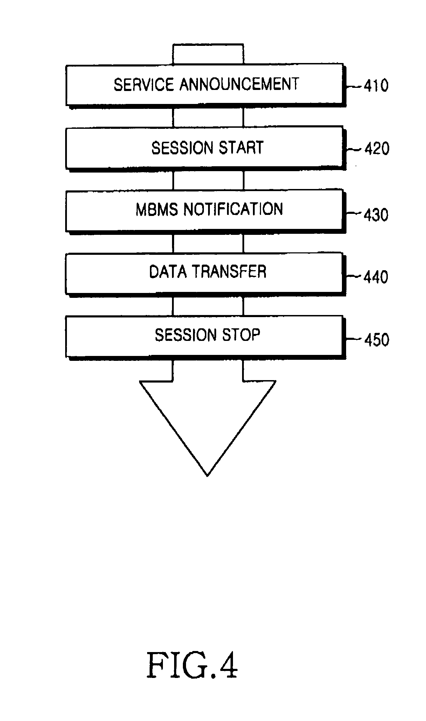

FIG. 4 is a flowchart illustrating an operation for receiving a broadcast service at the UE in the MBMS system. Compared to the multicast service, the broadcast service is provided on a common channel without uplink signaling, which obviates the need for the subscription 310, joining 330, and leaving 380 steps shown in FIG 3.

Referring to FIG 4, the UE is notified that it can receive an MBMS user service by a broadcast service in step 410 (service announcement). The BM-SC notifies the UE that it is ready to transmit MBMS data related to the broadcast service (broadcast data) in step 420 (session start) and the UE is notified that the broadcast data will be transmitted in step 430 (MBMS notification).

The broadcast data is delivered to the UE in step 440 (data transfer). In the data transfer step 440, the UE receives the MBMS user service by the broadcast service on a common channel. If there is no more broadcast data, the session is stopped in step 450 (session stop). The UE itself then discontinues the data reception on the common channel.

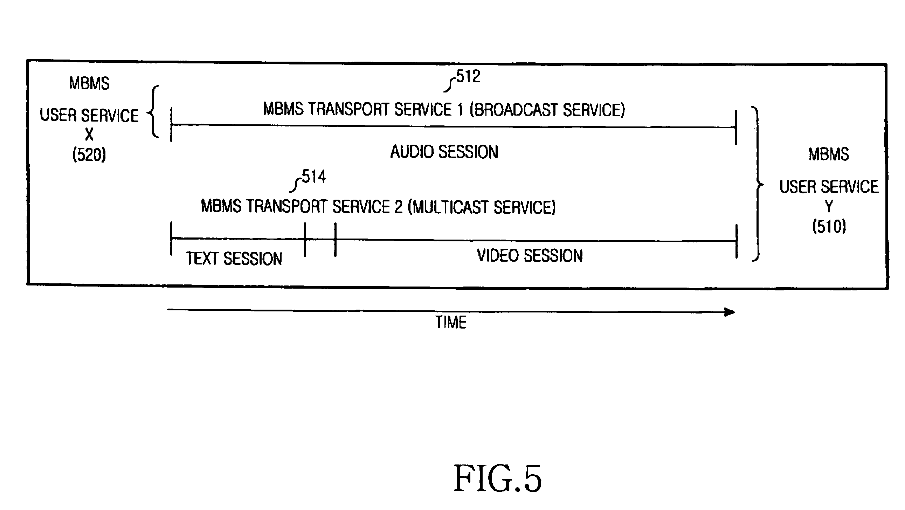

FIG. 5 illustrates an example of MBMS user service according to a preferred embodiment of the present invention.

Referring to FIG 5, an MBMS user service 520 (MBMS user service X) is composed of a broadcast service 512 for an audio session. The broadcast service 512 is also used for another MBMS user service 510 (MBMS user service Y). That is, MBMS user service Y includes a multicast service 514 for a text session and a video session and the broadcast service as well. This implies. that the multicast service 514 and the broadcast service 512 are provided using the ID (IDentifier) of MBMS user service Y. The UEs to which MBMS user service Y is destined for receive both the multicast service 514 and the broadcast service 512.

Such a broadcast service as the broadcast service 514 for multiple UEs within a cell can also be used for another MBMS user service.

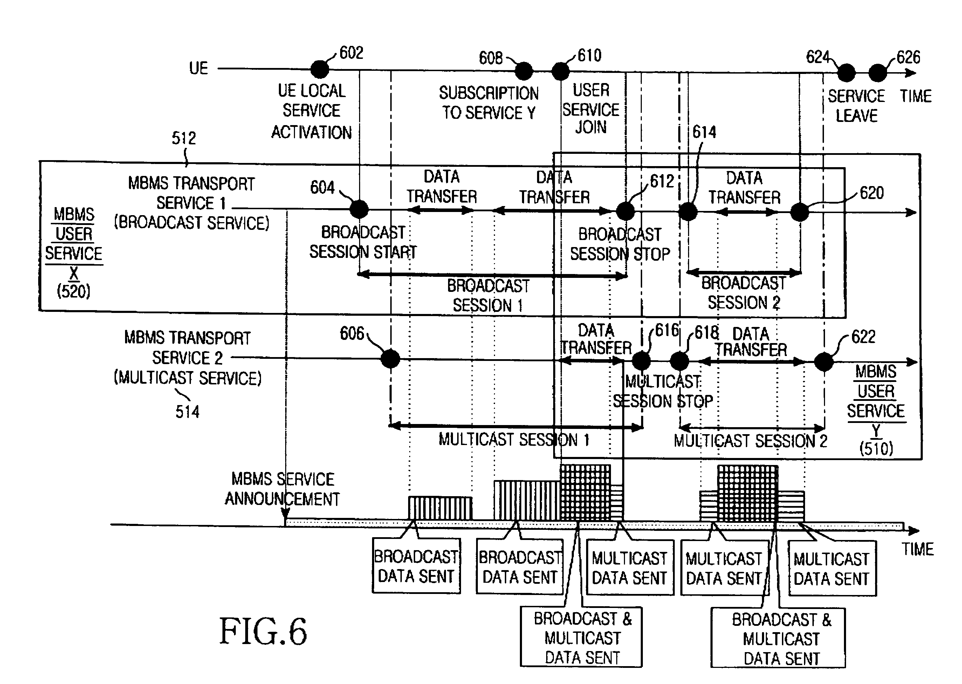

FIG. 6 illustrates an MBMS user service procedure over time according to a preferred embodiment of the present invention.

Referring to FIG. 6, the UE activates MBMS user service X available to the area in which the UE is located, a predetermined time after the service announcement at time 602. MBMS user service X is based on MBMS transport service 1 being a broadcast service. At time 604, broadcast session 1 of MBMS transport service 1 starts. The broadcast service has a short pause. Meanwhile, the MBMS transport service 2 being a multicast service starts multicast session 1 at time 606.

In the illustrated case of FIG. 6, for example, the UE receives broadcast data for broadcast session 1. During the receipt of the broadcast data, the UE subscribes to MBMS user service Y with converged broadcast and multicast services at time 608. While it is shown that the UE subscribes to MBMS user service Y while receiving the broadcast data at a second time, the subscription is not limited to the specific time and thus it is possible at any time. As the UE joins MBMS user service Y at time 610, it receives the broadcast data by broadcast session 1 and multicast data by multicast session 1 at the same time. The UE can also join the multicast session at any time.

When the broadcast session is stopped at time 612, the UE discontinues the reception of the broadcast data. In the same manner, when the multicast session is stopped at time 616, the UE discontinues the reception of the multicast data.

A predetermined time later, as broadcast session 2 and multicast session 2 start at time 614 and at time 618 for MBMS user service Y, the UE simultaneously receives broadcast data and multicast data in the same manner as broadcast session 1 and multicast session 1. If the UE leaves the multicast session at time 624, MBMS user service Y is completely deactivated at time 626. Upon user selection, the UE can receive MBMS user service X again.

An MBMS user service composed of a multicast service and a broadcast service is basically provided according to the multicast and broadcast service procedures illustrated in FIGs. 3 and 4. The procedures may occur at different times or in parallel according to the characteristics of the MBMS user service. Service announcements may be created either separately or commonly in the procedures. MBMS notification also occurs either separately or commonly according to the characteristics of the transport services of the MBMS user service.

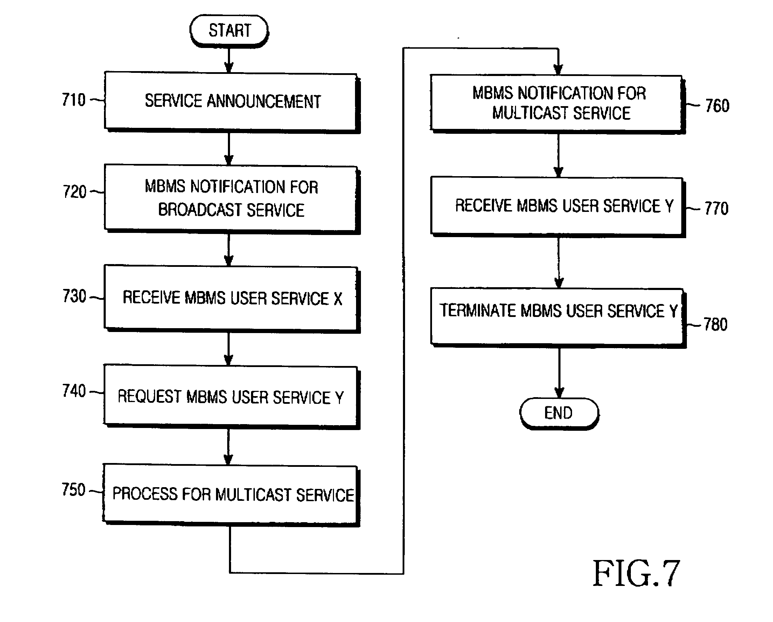

FIG. 7 is a flowchart illustrating an operation for receiving an MBMS user service at a UE according to a preferred embodiment of the present invention.

Referring to FIG. 7, when the UE enters an area in which an MBMS user service with either a single transport service or converged transport services (referred to a non-converged or converged MBMS user service) is available, it receives a service announcement that the MBMS user service is available in step 710. The UE is notified that broadcast data is to be transmitted in step 720 and receives a non-converged MBMS user service (MBMS user service X) based on a broadcast service in step 730.

If the user wants to additionally receive a multicast service for service enhancement, the UE requests a converged MBMS user service (MBMS user service Y) to receive the multicast service in step 740. Specifically, the UE subscribes to MBMS user service Y and joints it. In step 750, the UE performs a procedure for receiving the multicast service. That is, the UE establishes a dedicated channel for the multicast service under the control of the BM-SC and the RNC, while maintaining the common channel that delivers the broadcast data. Upon receipt of a notification that multicast data will be transmitted in step 760, the UE receives MBMS user service Y with the broadcast service and the multicast service converged in step 770.

By user request, or when MBMS user service Y is terminated, the UE ends the reception of MBMS user service Y in step 780. In this case, the UE may resume to receive MBMS user service X, or end the reception of both the broadcast and multicast services.

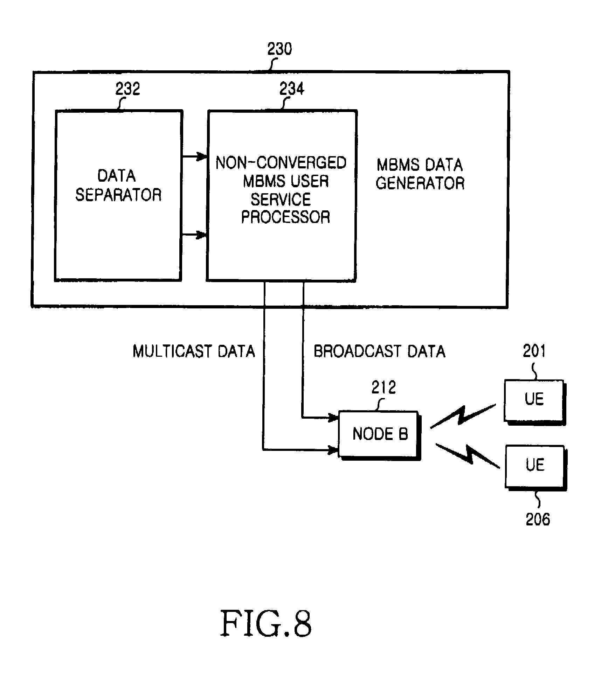

FIG 8 is a block diagram illustrating the configuration of a mobile communication system for transmitting MBMS data according to a preferred embodiment of the present invention. An MBMS data generator 230 is preferably incorporated into the BM-SC 226 illustrated in FIG. 2, or into another network entity like the RNC 216. The following description is made with the understanding that the MBMS data generator 230 is in the BM-SC 226.

Referring to FIG 8, the MBMS data generator 230 separately generates broadcast data and multicast data (in the BM-SC) or separates generated MBMS data into broadcast data and multicast data (in the RNC) by a data separator 232, and provides the broadcast data and multicast data to lower-layer ends of the CN (e.g. the GGSN, SGSN and RNC) by a non-converged MBMS user service processor 234.

The service processor 234 describes the transport service type of the MBMS data by a service index. For example, the service processor 234 attaches a service index a to the broadcast data and a service index b to the multicast data prior to the transmission to the Node B 212. The service indexes a and b identify the broadcast data and the multicast data, respectively.

The service processor 234 synchronizes the timing of the multimedia data (broadcast data and/or multicast data) using a CODEC according to the MBMS data type and describes the synchronization information using a time stamp.

The MBMS data generated from the MBMS data processor 230 is provided to the Node B 212 through the GGSN, SGSN, and RNC. The Node B 212 transmits the broadcast data and the multicast data respectively on a common channel and a dedicated channel to the UEs 201 and 206 within its cell.

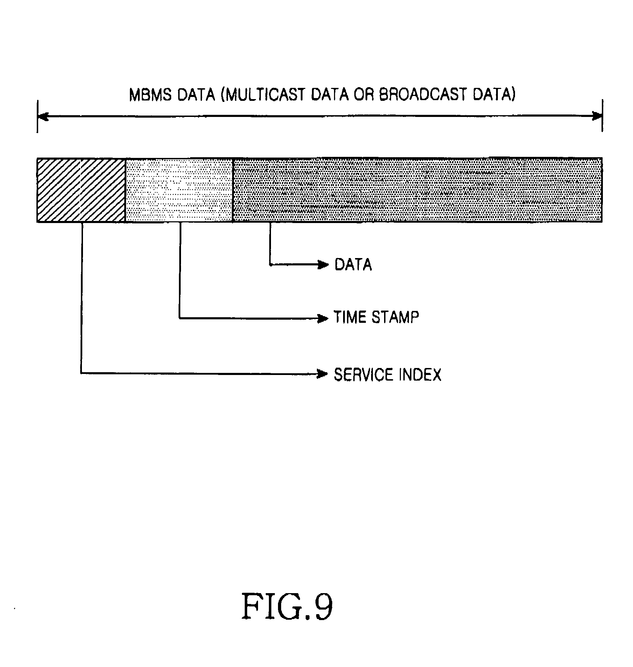

FIG 9 illustrates the structure of MBMS data generated by the 230.

Referring to FIG 9, the MBMS data may include broadcast data or multicast data according to a service type. The MBMS data is divided into an MBMS service index, a time stamp, and data. The MBMS service index indicates the MBMS transport service of the data. The time stamp is used to synchronize the multimedia data, for example, audio data and video data. The data includes the actual data of the broadcast or multicast service. It is to be appreciated that the video data refers to the data of pure moving pictures other than audio data.

If the UE receives MBMS user service X based on a broadcast service only, it processes the MBMS data with index a, that is, broadcast data only. If the UE receives MBMS user service Y with broadcast data and multicast data, it processes both the broadcast data and the multicast data.

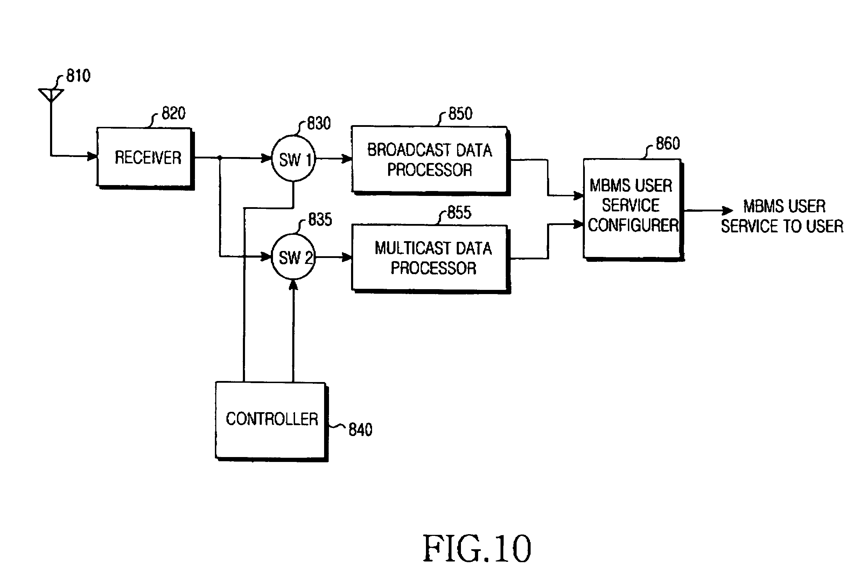

FIG. 10 is a block diagram of a UE for receiving an MBMS user service according to a preferred embodiment of the present invention.

Referring to FIG 10, a radio signal from a Node B is received at a receiver 820 via a receive antenna 810 in the UE. The receiver 820 downconverts the radio signal to a baseband signal and separates the baseband signal into a common channel signal including the broadcast data and a dedicated channel signal including the multicast data. Switches 830 and 835 (switch 1 and switch 2) each pass a received signal in an on-state and block it in an off-state under the control of a controller 840.

The controller 840 knows the transport services of the MBMS user service by the procedure illustrated in FIG. 7. Hence, the controller 840 controls the switches 830 and 835. For example, if the MBMS user service requested by the UE is composed of broadcast data and multicast data, the controller 840 simultaneously turns on both the switches 830 and 835 to concurrently receive the MBMS data on the common channel and the dedicated channel. If only a broadcast session is connected to receive a non-converged MBMS user service with a broadcast service only, the controller 840 turns on the switch 830, turning off the switch 835.

A broadcast data processor 850, if receiving the common channel signal from the switch 830, detects the broadcast data from the common channel signal. Similarly, a multicast data processor 855, if receiving the dedicated channel signal from the switch 835, detects the multicast data from the dedicated channel signal.

The broadcast data and the multicast data each have the structure illustrated in FIG. 9. Hence, an MBMS user service configurer 860 synchronizes the timing of the data received from the broadcast data processor 850 and the multicast data processor 855 referring to the time stamps of the data, thereby configuring MBMS user service data for the user.

For example, if audio data is provided by the broadcast service and video data by the multicast data, the MBMS user service configurer 860 receives the audio data from the broadcast data processor 850 and the video data from the multicast data processor 855, configures the full moving picture data by synchronizing the timings of the audio and video data, and reproduces the moving picture data on a display and through a speaker.

In accordance with the present invention as described above, a single MBMS user service is provided simultaneously using both a broadcast service and a multicast service. Therefore, radio resources are saved and users can enjoy a variety of multiple user services.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method of providing a multicast service and a broadcast service to a user in a mobile communication system, comprising the steps of:
generating broadcast data and multicast data for a converged user service; and
simultaneously transmitting the broadcast data and multicast data to users that have joined a broadcast session and a multicast session.

2. The method of claim 1, wherein each of the broadcast data and the multicast data is identified by a unique service index.

3. The method of claim 1, wherein each of the broadcast data and the multicast data includes a service index, a time stamp for time synchronization, and data.

4. The method of claim 3, wherein the broadcast data includes audio data and the multicast data includes video data synchronized to the audio data.

5. The method of claim 1, wherein the transmission step comprises the step of transmitting the broadcast data on a common channel and transmitting the multicast data on a dedicated channel.

6. A method of receiving a multicast service and a broadcast service from a mobile communication system by a user terminal, comprising the steps of:
receiving broadcast data related to a broadcast service;
receiving multicast data related to a multicast service, while receiving the broadcast data, if the user terminal requests a converged user service including the broadcast service and the multicast service during reception of the broadcast service; and
processing the broadcast data and the multicast data in convergence.

7. The method of claim 6, wherein each of the broadcast data and the multicast data is identified by a unique service index.

8. The method of claim 6, wherein each of the broadcast data and the multicast data includes a service index, a time stamp for time synchronization, and data.

9. The method of claim 8, wherein the broadcast data includes audio data and the multicast data includes video data synchronized to the audio data.

10. The method of claim 6, wherein the broadcast data is received on a common channel, and the multicast data is received on a dedicated channel.

11. The method of claim 6, further comprising the steps of:
subscribing to the converged user service and joining the converged user service during reception of the broadcast data; and
receiving a notification that the multicast service will be provided.

12. The method of claim 6, wherein the multicast data reception step comprises the step of establishing a dedicated channel for receiving the multicast service, while maintaining a common channel for receiving the broadcast service.

13. A system for providing a multicast service and a broadcast service to a user, comprising:
a user data generator for separately generating broadcast data and multicast data for a converged user service including a broadcast service and a multicast service; and
a base station for receiving the broadcast data and the multicast data from the user data generator and transmitting the broadcast data on a common channel and the multicast data on a dedicated channel.

14. The system of claim 13, wherein each of the broadcast data and the multicast data is identified by a unique service index.

15. The system of claim 13, wherein each of the broadcast data and the multicast data includes a service index, a time stamp for time synchronization, and data.

16. The system of claim 15, wherein the broadcast data includes audio data and the multicast data includes video data synchronized to the audio data.

17. The system of claim 13, further comprising a user terminal for establishing a broadcast session and a multicast session with the user data generator through the base station, simultaneously receiving the broadcast data on the common channel and the multicast data on the dedicated channel, and processing the broadcast data and the multicast data in convergence.

18. The system of claim 17, wherein the user terminal comprises:
a receiver for receiving a signal including a first signal on the common channel including the broadcast data and a second signal on the dedicated channel including the multicast data from the user data generator of the base station;
a controller for determining the type of a service that the user terminal receives;
a broadcast data processor for detecting the broadcast data from the first signal, if only the broadcast service is received or if both the broadcast service and the multicast service are received;
a multicast service for detecting the multicast data from the second signal, if both the broadcast service and the multicast service are received; and
a user service configurer for converging the broadcast data and the multicast data and providing the converged data to a user.

19. The system of claim 17, wherein the user terminal subscribes to the converged user service and joins the converged user service during reception of the broadcast data, and receives a notification that the multicast service will be provided.

20. The system of claim 19, wherein after the joining, the user terminal establishes the dedicated channel for receiving the multicast service, while maintaining the common channel for receiving the broadcast service.

21. A user terminal for providing a multicast service and a broadcast service to a user, comprising:
a receiver for receiving a signal including a first signal on the common channel including broadcast data and a second signal on the dedicated channel including multicast data from a user data generator of a base station, the broadcast data being of a broadcast service and the multicast data being of a multicast service in a converged user service;
a controller for determining the type of service that the user terminal receives;
a broadcast data processor for detecting the broadcast data from the first signal, if only the broadcast service is received or if both the broadcast service and the multicast service are received;
a multicast service for detecting the multicast data from the second signal, if both the broadcast service and the multicast service are received; and
a user service configurer for converging the broadcast data and the multicast data and providing the converged data to a user.

22. The user terminal of claim 21, wherein the controller controls the user terminal to subscribe to the converged user service and join the converged user service during reception of the broadcast data, and receive a notification that the multicast service will be provided.

23. The user terminal of claim 21, wherein the controller controls the dedicated channel to be established for receiving the multicast service after the joining, while maintaining the common channel for receiving the broadcast service.
